# FASCICULE DE BREVET EUROPEEN

(11) **EP 0 702 444 B1**
(45) Date de publication et mention de la délivrance du brevet: **11.11.1998**
(21) Numéro de dépôt: 95402047.5
(22) Date de dépôt: 11.09.1995
(51) Int. Cl.: H02G 15/18

(54) **Support de pose d'un manchon rétractable**
Verlegungsstütze für eine rückstellfähige Manschette
Laying support for a recoverable sleeve

(30) Priorité: 14.09.1994 FR 9410971
(43) Date de publication de la demande: 20.03.1996
(73) Titulaire: ALCATEL ALSTHOM COMPAGNIE GENERALE D'ELECTRICITE, 75008 Paris (FR)
(72) Inventeur: Cheenne-Astorino, Annie, B-1785 Merchtem (BE); Brackeniers, Christophe, B-9300 Aalst (BE)
(74) Mandataire: Fournier, Michel

(56) Documents cités:
- EP-A- 0 424 090
- EP-A- 0 541 000
- WO-A-93/22816
- FR-A- 2 505 567
- FR-A- 2 592 825
- US-A- 3 384 700
- US-A- 3 515 798
- US-A- 3 823 254

## Description

La présente invention porte sur un support de pose d'un manchon rétractable, destiné à assurer la mise en place avec serrage du manchon sur un élément à recouvrir.

Ce type de support est en tant que tel connu et utilisé notament pour la mise en place d'un manchon sur un équipement terminal de câble ou un équipement de jonction de deux câbles ou tout élément devant recevoir un manchon se rétractant sur celui-ci. Le support porte initialement le manchon expansé et est ainsi monté sur l'élément pour le positionnement du manchon sur ce dernier. Il est dégagé pour la mise en place directement et la rétraction simultanément du manchon sur l'élément.

Le document FR-A 2592825 décrit un mode de réalisation d'un tel support, constitué par un tube qui est dégagé du dessous du manchon expansé, pour la mise en place du manchon sur un élément intérieur. Selon ce document, un film de glissement recouvre la surface extérieure du tube sur au moins une partie de sa longueur. Le film est fixé à l'une des extrémités dite avant du tube, est par ailleurs libre sur la surface extérieure du tube et est ainsi prisonnier entre le manchon expansé et le tube. Le dégagement du tube est effectué en le tirant par son extrémité dite arrière, avantageusement non recouverte par le film.

Au fur et à mesure du dégagement du tube, le manchon se met en place et se rétracte simultanément sur l'élément, avec le film se retournant sur lui-même entre le manchon et l'élément. Quand le tube est totalement dégagé du dessous du manchon, le film est à son tour dégagé par une course supplémentaire du tube.

Un tel support est en pratique utilisé lorsque le manchon est relativement court et/ou d'épaisseur relativement faible. Lorsque la manchon est long et/ou épais, on utilise un support double, dont les deux parties sont constituées par deux tubes, tels que le tube précité, qui sont indépendants l'un de l'autre et disposés tête-bêche bout à bout et portent le manchon expansé. Les deux parties sont dégagées l'une après l'autre du dessous du manchon, lors de la mise en place de ce dernier.

Le problème posé par un tel support double tube est que lors du dégagement du premier des deux tubes, le deuxième tube a tendance à se déplacer avec le premier sur l'élément. Ceci conduit à un mauvais positionnement du manchon sur l'élément.

Le document US-A-3 515 798 décrit un autre mode de réalisation d'un tel support dit tube spiralé. Ce tube spiralé est à spires hélicoïdales, continues et liées sur leur longueur les unes aux autres, qui définissent autant de parties tubulaires élémentaires solidaires les unes des autres que de spires sur le tube spiralé unique.

Ce tube spiralé est dégagé du manchon expansé en tirant sur la spire terminale dite avant et les spires suivantes, depuis l'extrémité opposée dite arrière du tube, pour défaire le tube. Une patte liée à la spire terminale avant s'étend à cet effet par l'intérieur du tube jusqu'au delà de l'extrémité arrière de ce tube.

Le document WO 93/22816 décrit également un support dit tube spiralé dont les spires sont annulaires et définissent entre elles un serpentin pour défaire les spires alternativement dans un sens et l'autre.

Ces supports spiralés posent le même problème que les supports doubles et ont tendance à se déplacer sur l'élément, quand on les défait pour les dégager du dessous du manchon alors mis incorrectement en place.
Le document EP-A-0 541 000 divulgue un support tubulaire en deux parties mises bout à bout dont chacune des deux parties est un tube dit spiralé. Il enseigne, pour la dépose du manchon maintenu expansé sur un tel support à une position relativement précise sur des câbles raccordés, de tenir fermement à la main ou à l'aide d'un équipement approprié l'une des extrémités du support, soit l'extrémité dite extérieure de l'un des deux tubes spiralés, et de tirer depuis cette même extrémité sur les spires de l'autre extrémité dite intérieure de ce même tube, pour les défaire et les dégager du dessous du manchon se rétractant alors au fur et à mesure du dégagement de ce tube.

Ces mesures de maintien même très ferme de l'extrémité extérieure de l'un des deux tubes spiralés ne sont pas toujours satisfaisantes, en particulier lorsque la force de traction nécessaire pour dégager les spires est relativement importante. Elles ne conviennent par contre pas quand les tubes sont non pas spiralés mais continus et alors dégagés par glissement sous le manchon, ce qui suppose que le tube à dégager ne peut pas par ailleurs être tenu fermement.

Le document US-A-3 823 254 divulgue une autre technique de réalisation d'une protection autour de câbles raccordés en obtenant un positionnement précis de cette protection. Cette autre technique consiste à monter un boîtier cylindrique sur le raccord et les câbles de part et d'autre, à fixer de manière positive ce boîtier aux câbles à l'aide de moyens prévus à cet effet sur le boîtier et alors à injecter un composé de moulage dans la cavité du boîtier à travers des orifices fermés de celui-ci, qui sont à la fin de cette injection.

Cette technique est totalement différente de celle de dépose d'un manchon élastique rétractable initialement expansé sur un support de pose, qui est celle visée par la présente demande.

La présente invention a pour but de remédier aux problèmes de dépose aisée et de mise en place correcte d'un manchon rétractable sur un élément.

Elle a pour objet un support de pose d'un manchon rétractable, destiné à porter le manchon expansé, à positionner le manchon sur un élément et à assurer la mise en place avec serrage du manchon sur ledit élément par dégagement du support du dessous dudit manchon, comportant des parties tubulaires sensiblement jointives et dégagées tour à tour du dessous dudit manchon, caractérisé en ce qu'il comporte un moyen de fixation positive de la dernière partie tubulaire à dégager du dessous dudit manchon audit élément, pour le blocage temporaire en position fixe de ladite dernière partie tubulaire sur ledit élément pendant le dégagement de chaque autre partie tubulaire.

Ce support présente avantageusement en outre au moins l'une des caractéristiques additionnelles suivantes :
- le moyen de fixation positive est un moyen de serrage, en particulier une lanière, traversant ladite dernière partie tubulaire et formant une boucle intérieure, fermée sur elle-même sur l'extérieur de ladite dernière partie tubulaire, pour laquelle sont prévus deux passages traversants dans ladite dernière partie tubulaire.
- le support comporte deux tubes qui sont montés bout à bout par leurs extrémités dites avant et constituent lesdites parties tubulaires, et ledit moyen de fixation positive est monté sur la partie terminale opposée à l'extrémité avant du tube dégagé en dernier, qui constitue ladite dernière partie tubulaire.
- le support est formé par un tube spiralé unique, dont les spires constituent lesdites parties tubulaires, alors élémentaires, à dégager successivement du dessous dudit manchon par traction sur l'une des deux spires terminales dite spire avant depuis l'extrémité opposée dite arrière dudit tube, et ledit moyen de fixation positive est monté à travers l'une des spires sensiblement opposées à la spire avant et dites arrière, ces spires arrière constituant ladite dernière partie tubulaire dégagée.

Les caractéristiques et avantages de la présente invention ressortiront de la description faite ci-après d'exemples de réalisation illustrés dans les dessins ci-annexés. Dans ces dessins :
- la figure 1 est une vue schématique en coupe d'un support de pose d'un manchon rétractable, selon l'invention,
- la figure 2 est une vue schématique partielle du support selon la figure 1, illustrant l'opération de pose du manchon,
- les figures 3 et 4 sont deux vues en perspective partielle et latérale du support de la figure 1,
- la figure 5 est une vue schématique en perspective d'une variante de réalisation du support équipé selon l'invention.

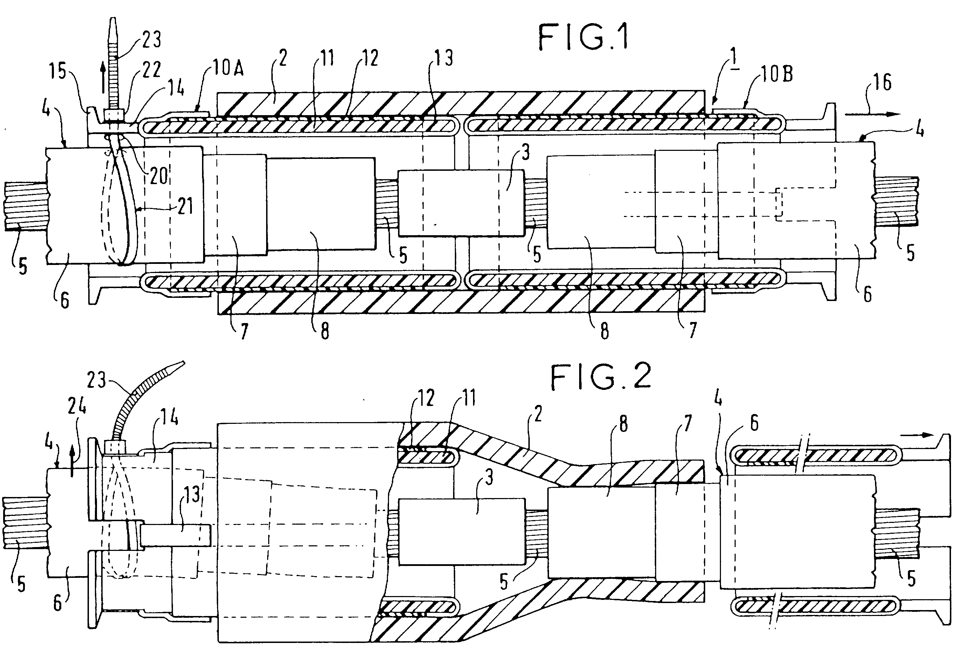

Dans les figures 1, 2 et 5, on a illustré un support 1 ou 1' équipé selon l'invention pour la pose d'un manchon élastiquement rétractable 2 sur un élément 3 de jonction de deux câbles 4, cet élément étant visible dans les seules figures 1, 2 et 5. Dans ces exemples l'élément de jonction raccorde les âmes dénudées 5 des deux câbles, les parties terminales des câbles étant préalablement préparées par retrait en dégradé de la gaine extérieure 6, de l'écran conducteur et/ou semiconducteur 7 et de l'isolation interne 8 entourant l'âme de chaque câble.

Dans ces exemples le manchon 2 appartient en tant que tel à la jonction et doit venir recouvrir partiellement l'écran dénudé de chaque câble et s'étendre entre les écrans. En variante, il peut assurer la protection extérieure de la jonction et s'étend alors sur les parties terminales des gaines des câbles et entre elles. En variante également, il peut appartenir à la jonction, en constituant le corps de jonction et assurant à la fois la protection extérieure de la jonction. Ce manchon en tant que tel hors de la présente invention a été de ce fait illustré monocouche. Il est en pratique multicouche ou monocouche et/ou formé d'un double manchon, selon les fonctions assurées.

En se répérant aux figures 1 et 2, on voit que le support 1 est constitué par deux parties tubulaires 10A et 10B, semblables l'une à l'autre et disposées bout à bout par l'une de leurs extrémités dite avant. Il porte le manchon expansé, qui s'étend sur les deux parties tubulaires, pour le positionnement du manchon et sa mise en place avec serrage sur l'élément 3 et les parties dénudées des deux câbles. Il est de dimensions internes suffisantes pour coulisser sur les câbles, pour son positionnement avec le manchon sur l'élément 3 et le dégagement de ses parties tubulaires du dessous du manchon avec la mise en place résultante simultanément du manchon.

Ces deux parties tubulaires sont équipées identiquement, à l'exception d'une disposition particulière prévue uniquement sur l'une d'elles ou prévue sur les deux mais utilisée uniquement sur l'une d'elles, ainsi que précisé ci-après.

Chaque partie tubulaire comporte identiquement, ainsi que référencé sur la seule partie 10A, un tube 11 rigide et de préférence en plastique, et un film 12 souple et résistant et ayant un faible coefficient de frottement. Ce film recouvre la surface extérieure du tube et s'étend depuis son extrémité avant jusque sensiblement son extrémité arrière opposée. De préférence ce film est libre sur le tube 11 et ne recouvre pas l'extrémité arrière du tube. Le tube porte alors en outre un moyen d'entraînement 13 du film 12, depuis sa surface extérieure, autour de son extrémité avant et sur sa surface intérieure, quand cette partie tubulaire est dégagée par traction arrière du dessous du manchon.

Ce moyen d'entraînement est dans cet exemple un jeu de courroies solidaires du bord avant et du bord arrière du film et les reliant l'un à l'autre. Les courroies s'étendent à l'intérieur du tube et sur la partie extérieure arrière du tube. En variante, ces courroies s'étendent extérieurement et intérieurement sur le tube en formant chacune une boucle fermée sur elle-même d'entraînement du film entre chaque courroie et le tube. Le film et les courroies sont de nature analogue. Ils ont de préférence un revêtement pelliculaire de surface qui est anti-adhésif, par exemple à base de silicone.

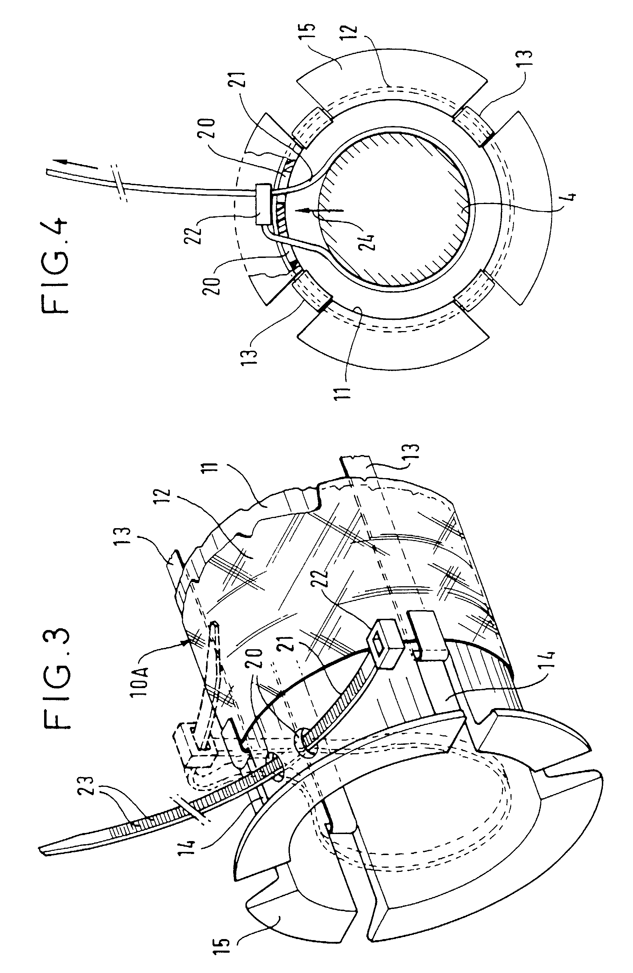

Sur sa partie arrière, chaque tube 11 présente, ainsi que montré également dans les figures 3 et 4, un jeu de fentes 14 affectées au passage des courroies depuis la surface intérieure à la surface extérieure du tube. Il présente aussi un épaulement terminal arrière 15 pour des facilités de traction arrière du tube, selon la flèche 16 pour la partie tubulaire 10B et en sens opposé pour l'autre partie 10A. Cet épaulement peut bien entendu être remplacé par un autre moyen facilitant la traction arrière du tube, par exemple par des trous d'insertion d'un outil de traction dans la partie arrière dudit tube.

L'un des tubes 11 ou de préférence chacun des deux tubes ainsi rendus de réalisation identique, présente en outre deux passages traversants 20, prévus côte à côte dans la partie arrière du tube concerné. Ces deux passages de l'un uniquement des deux tubes sont affectés à la réception d'un moyen de fixation positive 21 au câble pour le blocage en translation de ce tube 11 ou de la seule partie tubulaire concernée 10A, pendant que l'autre partie tubulaire 10B est dégagée du dessous du manchon.

Ce moyen de fixation 21 assure le blocage en position de la partie tubulaire 10A sur le câble 4 correspondant, c'est-à-dire relativement à l'élément 3.

Ainsi que montré, le moyen de fixation est en particulier une lanière de serrage, montée à travers les deux passages dans le tube, en formant une boucle entourant le câble 4. Elle est fermée sur elle-même sur l'extérieur de la partie tubulaire 10A. Elle présente à cet effet, un anneau de fermeture 22 sur l'une de ses parties terminales, pour recevoir l'autre partie terminale. Cette dernière présente avantageusement des stries 23 pour éviter son glissement dans l'anneau quand la lanière est serrée pour appliquer et maintenir le câble 4 contre la partie tubulaire 10A, ainsi que symbolisé par la flèche 24 dans les figures 1 et 4 et illustré dans la figure 2.

Dans la figure 2, on a montré le manchon 2 partiellement en place avec serrage, par dégagement de la partie tubulaire 10B selon la flèche 16 du dessous du manchon. La partie tubulaire 10A reste fermement bloquée en position sur le câble 4 pendant toute l'opération de dégagement de la partie 10B. Pour son propre dégagement du dessous du manchon, la lanière est ouverte ou coupée pour libérer la partie tubulaire 10A relativement au câble 4 et donc à l'élément 3.

Les parties tubulaires étant dégagées du dessous du manchon, elles sont retirées du dessus des câbles 4. Elles présentent à cet effet, ainsi que bien connu, une ligne longitudinale d'amorce de rupture sur le tube. Le film, situé contre la surface intérieure du tube quand celui-ci est dégagé du dessous du manchon, peut aisément être ramené sur l'extérieur du tube, par entraînement à la main des courroies 13, pour être sectionné avant rupture du tube 11.

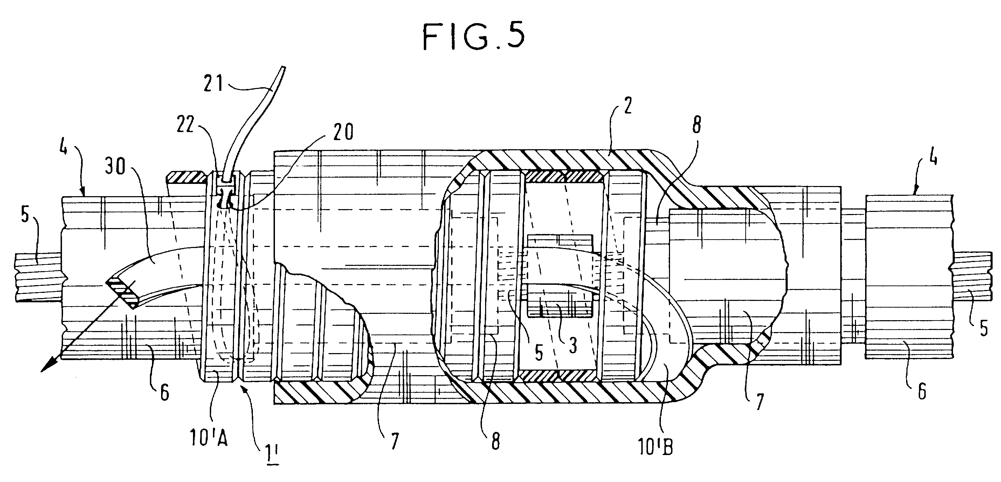

Dans la figure 5, le support 1' est du type spiralé, qui est également équipé selon l'invention.

Ce support spiralé 1' est constitué par des spires successives solidaires en long les unes des autres et susceptibles de se défaire à la suite les unes des autres par traction sur la spire terminale dite avant 10'B et les suivantes depuis l'extrémité arrière du support. Une longueur supplémentaire 30 est solidaire de la spire avant 10'A et est rendue accessible sur l'extrémité arrière du support pour cette traction. Ces différentes spires sont analogues à des parties tubulaires, alors élémentaires, d'un support tubulaire unique, que l'on dégage à la suite les unes des autres du dessous du manchon 2.

Ce support 1' est équipé de manière similaire au support 1 précédent, pour le blocage en translation de sa partie arrière pendant que la spire avant et les suivantes sont défaites et dégagées du dessous du manchon.

Il comporte deux passages traversants 20, prévus sur sa spire arrière, ou l'une des spires de sa partie arrière, à travers lesquels est monté le moyen de fixation positive pour le blocage en translation de cette partie arrière relativement au câble correspondant et à l'élément de jonction.

Ce moyen est en particulier une lanière comme sur le support des figures précédentes et ainsi que désigné par les références précédemment utilisées. Il est déverrouillé pour le dégagement final de la ou des spires arrière.

Ce support spiralé 1' peut en outre présenter une ligne génératrice de rupture, non représentée, et être formé de spires ou bagues annulaires solidaires les unes des autres le long de la ligne de rupture, pour se défaire par déroulement alterné dans un sens et l'autre.

En variante non représentée et déduite des deux exemples illustrés, le support de pose du manchon rétractable peut être constitué par deux tubes spiralés montés bout à bout pour porter le manchon. Dans ces conditions l'une des dernières spires à dégager du dessous du manchon, qui appartient à l'un et à l'autre de ces deux tubes spiralés est temporairement fixée positivement au câble pour être bloquée en translation pendant le dégagement des spires avant de chaque tube spiralé concerné.

Bien entendu également les spires individuelles successives peuvent elle-mêmes être dégagées en les déroulant dans le même sens ou alternativement dans un sens ou l'autre.

## Revendications

1. Support de pose d'un manchon rétractable (2), destiné à porter le manchon expansé, à positionner le manchon sur un élément (3, 4) et à assurer la mise en place avec serrage du manchon sur ledit élément par dégagement du support (1, 1') du dessous dudit manchon, comportant des parties tubulaires (10A, 10B, 10'A, 10'B) sensiblement jointives et dégagées tour à tour du dessous dudit manchon, caractérisé en ce qu'il comporte un moyen de fixation positive (21) de la dernière partie tubulaire (10A, 10'A) à dégager du dessous dudit manchon (2) audit élément, pour le blocage temporaire en position fixe de ladite dernière partie tubulaire sur ledit élément (3,4) pendant le dégagement de chaque autre partie tubulaire (10B, 10'B).

2. Support selon la revendication 1, caractérisé en ce que ledit moyen de fixation positive (21) est un moyen de serrage, équipant ladite dernière partie tubulaire (10A, 10'A) et s'étendant intérieurement dans celle-ci et desserable depuis l'extérieur de ladite dernière partie tubulaire.

3. Support selon la revendication 2, caractérisé en ce que ledit moyen de fixation positive (21) est une lanière, traversant ladite dernière partie tubulaire et formant une boucle intérieure, fermée sur elle-même sur l'extérieur de ladite de cette dernière partie tubulaire, pour laquelle sont prévus deux passages traversants (20) dans ladite dernière partie tubulaire (10A, 10'A).

4. Support selon l'une des revendications 1 à 3 et constitué par deux parties tubulaires (10A, 10B) montées bout à bout par une de leurs extrémités dite avant, ledit moyen de fixation positive (21) étant monté sur la partie terminale dite arrière de la partie tubulaire dégagée en dernier lieu, qui constitue ladite dernière partie tubulaire (10A).

5. Support selon la revendication 4, caractérisé en ce que chacune desdites parties tubulaires (10A, 10B) comporte un tube (11) portant extérieurement un film souple et résistant (12) ayant un faible coefficient de frottement et s'étendant sur au moins une partie de la longueur du tube depuis son extrémité avant.

6. Support selon la revendication 5, caractérisé en ce que ledit film est libre relativement au tube et en ce que chaque partie tubulaire (10A, 10B) comporte en outre un moyen d'entraînement (13) dudit film, autour de son extrémité avant et intérieurement dans le tube, quand le tube concerné est dégagé.

7. Support selon la revendication 4, caractérisé en ce que les parties tubulaires (10A, 10B) sont deux tubes spiralés.

8. Support selon l'une des revendications 1 à 3, et constitué par un tube unique spiralé (1') dégagé du dessous du manchon en défaisant les spires successives, formant lesdites parties tubulaires, alors élémentaires, par traction sur une spire terminale dite avant (10'B) et sur les spires suivantes depuis l'extrémité opposée dite arrière (10'A) du tube unique, ledit moyen de fixation positive (21) étant monté à travers l'une des spires opposées à la spire avant (10'B) et dites arrière (10'A), les spires arrière constituant ladite dernière partie tubulaire dégagée.

## Patentansprüche

1. Träger zum Verlegen einer zusammenziehbaren Manschette (2), der dazu bestimmt ist, die gedehnte Manschette zu tragen, die Manschette auf einem Element (3, 4) zu positionieren und das Anbringen der Manschette auf dem besagten Element mit Einspannen des letzteren durch Herauslösen des Trägers (1, 1') unter der Manschette zu gewährleisten, die im wesentlichen aneinanderstoßende röhrenförmige Abschnitte (10A, 10B, 10'A, 10'B) umfaßt, die nacheinander unter der Manschette herausgelöst werden,
dadurch gekennzeichnet, daß er umfaßt: ein Befestigungsmittel (21) zum positiven Befestigen des letzten unter der Manschette des Elementes herauszulösenden röhrenförmigen Abschnittes (10A, 10'A), zum zeitweiligen Blockieren des letzten röhrenförmigen Abschnittes in einer festen Position auf dem Element (3, 4) während des Herauslösens jedes anderen röhrenförmigen Abschnittes (10B, 10'B).

2. Träger nach Anspruch 1, dadurch gekennzeichnet, daß das positive Befestigungsmittel (21) ein Einspannmittel ist, mit dem der letzte röhrenförmige Abschnitt (10A, 10'A) ausgestattet ist und der sich innerhalb von diesem erstreckt und von außerhalb dieses letzten röhrenförmigen Abschnitts her entspannbar ist.

3. Träger nach Anspruch 2, dadurch gekennzeichnet, daß das positive Befestigungsmittel (21) ein Riemen ist, der den letzen röhrenförmigen Abschnitt durchquert und eine innere Schleife bildet, die über die Außenseite des letzten röhrenförmigen Abschnittes in sich geschlossen ist, für die zwei Durchgänge (20) in dem letzten röhrenförmigen Abschnitt (10A, 10'A) vorgesehen sind.

4. Träger nach einem der Ansprüche 1 bis 3, gebildet durch zwei röhrenförmige Abschnitte (10A, 10B), die einem ihrer Enden, als vorderes Ende bezeichnet, Ende an Ende aneinander angebracht sind, wobei das positive Befestigungsmittel (21) an dem als hinterer bezeichneten Endabschnitt angebracht ist, der als letzter herausgelöst wird, der den letzten röhrenförmigen Abschnitt (10A) bildet.

5. Träger nach Anspruch 4, dadurch gekennzeichnet, daß jeder der röhrenförmigen Abschnitte (10A, 10B) eine Röhre (11) aufweist, die außen einen nachgiebigen und widerstandsfähigen Film (12) mit einem geringen Reibungskoeffizienten trägt, der sich über wenigstens einen Abschnitt der Röhre von ihrem vorderen Ende aus erstreckt.

6. Träger nach Anspruch 5, dadurch gekennzeichnet, daß der Film relativ zur Röhre frei ist und daß jeder röhrenförmige Abschnitt (10A, 10B) ferner ein Mittel (13) zum Mitnehmen des Films um sein vorderes Ende und innerhalb der Röhre beim Herauslösen der betreffenden Röhre umfaßt.

7. Träger nach Anspruch 4, dadurch gekennzeichnet, daß die röhrenförmigen Abschnitte (10A, 10B) zwei Spiralröhren sind.

8. Träger nach einem der Ansprüche 1 bis 3, gebildet durch eine einzige Spiralröhre (1'), die unter der Manschette durch Zerlegen der die - dann elementaren - röhrenförmigen Abschnitte bildenden aufeinanderfolgenden Windungen durch Ziehen an einer als vordere bezeichneten Endwindung (10'B) und an den darauffolgenden Windungen vom als hinteres bezeichneten gegenüberliegenden Ende (10'A) der einzigen Röhre her herausgelöst wird, wobei das positive Befestigungsmittel (21) durch eine der der vorderen Windung (10'B) gegenüberliegenden und als hintere bezeichneten Windungen (10'A) hindurch angebracht ist und die hinteren Windungen den zuletzt herausgelösten röhrenförmigen Abschnitt bilden.

## Claims

1. Support for fitting a shrinkable sleeve (2), adapted to carry the prestretched sleeve, to locate the sleeve over an object (3, 4) and fit and clamp the sleeve to said object by removal of the support (1, 1') from under said sleeve, including substantially contiguous tubular parts (10A, 10B, 10'A, 10'B) removed in turn from under said sleeve, characterised in that it includes means (21) for positive fixation to said object of the last tubular part (10A, 10'A) to be removed from under said sleeve (2) for temporarily immobilising said last tubular part to said object (3, 4) in a fixed position thereon during removal of each other tubular part (10B, 10'B).

2. Support according to claim 1 characterised in that said positive fixing means (21) comprise clamping means equipping said last tubular part (10A, 10'A) and extending inside the latter, adapted to be released from outside said last tubular part.

3. Support according to claim 2 characterised in that said positive fixing means (21) comprise a cable tie passing through said last tubular part and forming an interior loop, closed upon itself outside said last tubular part, and for which two passages (20) are provided through said last tubular part (10A, 10'A).

4. Support according to any one of claims 1 to 3 comprising two tubular parts (10A, 10B) disposed end-to-end at their front ends, said positive fixing means (21) being mounted on the rear end part of the tubular part removed last, which constitutes said last tubular part (10A).

5. Support according to claim 4 characterised in that each of said tubular parts (10A, 10B) includes a tube (11) carrying on its outside a strong and flexible film (12) having a low coefficient of friction and extending over at least part of the length of the tube from its front end.

6. Support according to claim 5 characterised in that said film is not attached to the tube and in that each of the tubular parts (10A, 10B) further includes means (13) for pulling said film around its front end and inside the tube when the tube concerned is removed.

7. Support according to claim 4 characterised in that both tubular parts (10A, 10B) are spiral tubes.

8. Support according to any one of claims 1 to 3 comprising a single spiral tube (1') adapted to be removed from under the sleeve by separating the successive turns forming said tubular parts by pulling on a front end turn (10'B) and on the subsequent turns from the rear end (10'A) of the single tube, said positive fixing means (21) being mounted through one of the rear turns (10'A) at the end opposite the front turn (10'B), the rear turns constituting said last tubular part removed.
